# EUROPEAN PATENT SPECIFICATION

(11) **EP 2 892 183 B1**
(45) Date of publication and mention of the grant of the patent: **23.08.2017**
(21) Application number: 14305013.6
(22) Date of filing: 07.01.2014
(51) Int. Cl.: H04L 12/24, H04L 12/46

(54) **ENABLEMENT OF SERVICE LEVEL AGREEMENT NEGOTIATION**
ERMÖGLICHUNG EINER DIENSTLEISTUNGSEBENEN-VEREINBARUNGSVERHANDLUNG
VALIDATION D'UNE NÉGOCIATION D'ACCORDS DE NIVEAU DE SERVICE

(43) Date of publication of application: 08.07.2015
(73) Proprietor: ALCATEL LUCENT, 92100 Boulogne-Billancourt (FR)
(72) Inventor: Bui, Dinh Thai, 91620 Nozay (FR); Verchere, Dominique, 91620 Nozay (FR); Prunaire, Magali, 91620 Nozay (FR)
(74) Representative: Berthier, Karine

(56) References cited:
- WO-A1-2013/067466
- US-A1- 2005 088 977
- LUYUAN FANG DAVID WARD REX FERNANDO CISCO MARIA NAPIERALA AT&T NABIL BITAR VERIZON: "BGP/MPLS IP VPN Virtual PE; draft-fang-l3vpn-virtual-pe-04.txt", BGP/MPLS IP VPN VIRTUAL PE; DRAFT-FANG-L3VPN-VIRTUAL-PE-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 21 October 2013 (2013-10-21), pages 1-24, XP015095580, [retrieved on 2013-10-21]
- LUYUAN FANG JOHN EVANS DAVID WARD REX FERNANDO JOHN MULLOOLY CISCO NING SO TATA COMMUNICATIONS NABIL BITAR VERIZON: "BGP/MPLS IP VPN Virtual CE; draft-fang-l3vpn-virtual-ce-02.txt", BGP/MPLS IP VPN VIRTUAL CE; DRAFT-FANG-L3VPN-VIRTUAL-CE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 21 October 2013 (2013-10-21), pages 1-18, XP015095579, [retrieved on 2013-10-21]
- CARUGI M ET AL: "Service Requirements for Layer 3 Provider Provisioned Virtual Private Networks (PPVPNs); rfc4031.txt", 20050401, 1 April 2005 (2005-04-01), XP015041968, ISSN: 0000-0003

## Description

### TECHNICAL FIELD

The present invention relates to the field of data communication. More particularly, the invention concerns a method for enabling a Service Level Agreement negotiation in a data center.

### BACKGROUND

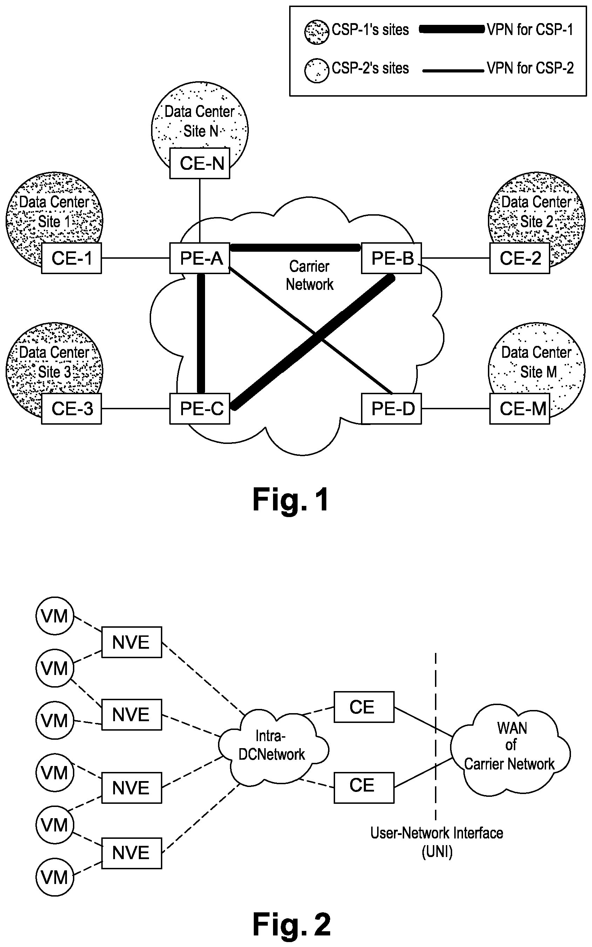

Companies, administrations, or single persons communicate daily between multiple sites and locations (e.g. employees working from their home office). Virtual Private Networks (VPNs) are commonly used for such purposes. Fig. 1 schematically illustrates a VPN architecture. More specifically, VPNs are services offered by a carrier (i.e. a network operator) to a Cloud Service Provider (CSP) in order to interconnect different Data Center (DC) sites and belonging to an enterprise or an administration. The DC sites are interconnected through VPNs that are tunneled through the carrier network (e.g. Wide Area Network (WAN)) and other physical networks, such as the Internet.

The generic architecture of a data center is shown in Fig. 2. A data center is connected through a gateway node (e.g. a Customer Edge node (CE)) to a peer Provider Edge node (PE) of the carrier network (see also CE-1 - CE-M and PE-A - PE-D of Fig. 1). The gateway node, or CE, represents a gateway for egress traffics towards or ingress traffics from the carrier network, each CE being connected to at least one PE.

Users, or tenants, of data centers are provided with cloud computing services according to their needs in terms of communication bandwidth, processing resources, storage resources, etc. For instance, processing resources in the data center are provided to the users in the form of Virtual Machines (VMs) which may be hosted by one or more physical devices.

The CSP and the carrier are of different administrative entities. Each VPN is specified by a service contract between the CSP and the carrier. In particular, such a service contract includes a Service Level Agreement (SLA) which specifies the level(s) of service being provided to the users, the SLA being negotiated between the CSP and the carrier, e.g. between the CE and the PE. The SLA includes, for example, specifications of various data rates, throughput, delay, jitter, etc. The SLA further encompasses the Quality of Service (QoS) parameters experienced by the user, the QoS parameters including the maximum bandwidth, the guaranteed bandwidth, the packet loss ratio, and the like.

The bandwidth requirements of a CSP typically evolve dynamically, which the SLA negotiated between the CSP and the carrier has to take into account. For instance, the CSP could temporarily require more bandwidth (e.g. critical data backup at failure event, unpredictable peak resource usage due to the pay-as-you-go model, etc.). On the carrier side, the dynamic statistic multiplexing of resource requirements of VPNs belonging to different CSPs (which generally vary with time) allows for better optimizing the infrastructure usage while improving customer satisfaction (e.g. integrating the pay-as-you-go business model into the network/transport service).

A number of known frameworks can be deployed for a better interworking between the CE and the carrier, represented by the PE, allowing for such required "dynamicity" of the VPN's SLA. Within these frameworks, signaling protocols have been defined in order to exchange network resource information between the CE and its peer PE. Examples include the Asynchronous Transfer Mode (ATM) Forum User-Network Interface (UNI) 4.0 signalization and the generalized Multi-Protocol Label Switching (GMPLS) UNI signalization. The exchanged information allows the PE to dynamically setup the VPN to meet the CE requirements in terms of QoS.

The way the Carrier implements the negotiated QoS parameters within its own infrastructure only depends on its own internal network design constraints and policies. This could be done according to built-in methods proposed by the UNI framework (e.g. ATM UNI 4.0 or GMPLS UNI), but also by implementing alternative methods (e.g. MPLS Differentiated Services).

Within the generic architecture of data centers, a Network Virtualization Edge (NVE) is a network entity connected to a VM. The NVE establishes virtual network (VN) tunnels through the CSP network to another NVE by encapsulating the VM traffics. The aforementioned tunnels eventually cross the carrier network in order to reach an NVE of another DC site. In general, there are several VN tunnels crossing a given CE, and there are multiple VPNs serving the same CE. There is not necessarily a one-to-one mapping between a VN and a VPN (e.g. a given VN can use no VPN at all if it is an intra-DC VN). Further, multiple tenants (i.e. CSP customers) can have access to one or multiple VNs.

VMs and NVEs are included in the DC overlay network while the CEs are part of the DC underlay network. The PEs are included in the carrier's network. Within the DC infrastructure, the overlay tunnels cross transparently the underlay networks, i.e. the overlay and the underlay networks are decoupled in terms of traffic forwarding information (such as network reachability, etc.). This allows for having the scalability required by Cloud environments.

However, between the CEs and both the VMs and NVEs, there is no information exchange on traffic characteristics. Thus, the CE has no detailed view on the VN traffic characteristics and, in particular, on the QoS requirements of the VM, so that it is not possible for the CE to derive the appropriate SLA to be negotiated with the carrier (represented by a peer PE). Accordingly, a CE which finds itself in the middle of a VN tunnel cannot be aware of all the details on VM traffic characteristics, but only observes instantaneous overall VN traffic characteristics, aggregating the VM traffic characteristics.

Existing solutions to address this issue include the following.

The CE may monitor ingress and egress traffics generated by all VN tunnels together and adapt (e.g. via SLA negotiation) the VPN overall bandwidth as appropriate. However, the CE cannot have fine grain access to VM traffic requirements, but only has access to the aggregated VN traffic instantaneous observable characteristics. For instance, the CE does not have access to information such as the priority between different types of data, resiliency requirements, end-to-end delay requirements, packet loss ratio requirements, etc. In terms of bandwidth, the CE can monitor the overall bandwidth usage of overlaid VNs (e.g. overall average bandwidth). However, it does not have access to the different QoS aspects (e.g. maximum bandwidth, guaranteed bandwidth, average bandwidth, etc.) required for the services supported by these overlaid VNs. Thus, the SLA negotiated by the CE in this case in terms of overall bandwidth is inaccurate and incomplete (e.g. for some VNs, the guaranteed bandwidth should be equal to the peak bandwidth and not to the average one).

Alternatively, NVEs may perform packet marking using VN encapsulation overhead, such as priority bits. There is a predefined one-to-one mapping between priority bit values and the SLAs (i.e. a number of predefined sets of QoS parameter values). Thus, the marking allows each NVE to indicate to the CE which predefined SLA to be used for a given VN. However, the one-to-one mapping is static, while the SLA definition within the Cloud environment needs to be dynamic. Further, the number of priority bit values is limited (e.g. possible values for 802.1q priority bits are from 0 to 7). This solution is thus not well adapted for large DCs, i.e. a large number of tenants and an increasing number of VN per tenant (scalability problem), and leads to resource waste and thus to higher costs for carrying DC traffics.

According to the foregoing, there exists a need for improved SLA negotiation management allowing for a dynamic and appropriate negotiation of the SLA between a data center and the carrier.

LUYUAN FANG DAVID WARD REX FERNANDO CISCO MARIA NAPIERALA AT&T NABIL : BITAR VERIZON: "BGP/MPLS IP VPN Virtual PE; draft-fang-I3vpn-virtual-pe-04.txt",BGP/MPLS IP VPN VIRTUAL PE; DRAFT-FANG-L3VPN-VIRTUAL-PE-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 21 October 2013 (2013-10-21), and LUYUAN FANG JOHN EVANS DAVID WARD REX FERNANDO JOHN MULLOOLY CISCO NING SO TATA COMMUNICATIONS NABIL BITAR VERIZON: "BGP/MPLS IP VPN Virtual CE; draft-fang-I3vpn- ; virtual-ce-02.txt",BGP/MPLS IP VPN VIRTUAL CE; DRAFT-FANG-L3VPN-VIRTUAL-CE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 21 October 2013 (2013-10-21) teach methods for virtualising an MPLS provider edge node, PE, or an MPLS customer edge node, CE, as part of a cloud-based provisioning of virtual machines. Virtualised PEs or CEs provide MPLS VPN access for VMs. Both documents teach control flow comprising network reachability information which flows in the opposite direction than the data flow to be established.

US 2005/088977 A1 (ROCH STEPHANE S [CA] ET AL) 28 April 2005 (2005-04-28) teaches a method for dynamically changing QoS parameters of an existing IPsec VPN without tearing down or re-establishing the VPN tunnel. QoS parameters are provided via a policy server to the VPN gateways; the VPN gateways encapsulate traffic before it enters the carrier's network.

WO 2013/067466 A1 (HUAWEI TECH CO LTD [CN]; HARES SUSAN [US]; YONG LUCY [US]) 10 May 2013 (2013-05-10) teaches a method for automatic joining or leaving a virtual network using BGP as signaling protocol. Method further discloses encapsulating traffic from virtual machines by network virtual entities (NVE) as overlay tunnels.

### SUMMARY OF EXEMPLARY EMBODIMENTS

Embodiments of the present invention provide an improved method for enabling a Service Level Agreement (SLA) negotiation in a data center, wherein the method resolves the above mentioned problems.

According to a first aspect, there is provided a method for enabling a SLA negotiation, in a data center comprising, at a first data center site, overlay network elements and underlay network elements, the overlay network elements including a plurality of virtual machines, the underlay network elements including a gateway node,
wherein the data center is configured to be connected to a provider edge node of a carrier network via the gateway node through a User-Network Interface, UNI, between the gateway node and the provider edge node, wherein the negotiation of the SLA between the first data center site and the carrier network is controlled by a UNI control function,
wherein egress traffic flows in the overlay network from at least one of the plurality of virtual machines are encapsulated into a virtual network tunnel by a virtual network control function, the virtual network tunnel being configured to cross the gateway node and the UNI,
the method comprising:
- dynamically communicating required Quality of Service, QoS, parameters detained by the virtual network control function to the UNI control function for an egress traffic flow within the virtual network tunnel; and
- applying the required QoS parameters in the SLA negotiation for the egress traffic flow.

Advantageously, the data center is configured to be connected to the provider edge node of the carrier network via the gateway node through a plurality of UNIs between the gateway node and the provider edge node, the method further comprising:
- identifying the UNI of the plurality of UNIs which the virtual network tunnel is configured to cross.

In some embodiments, the step of dynamically communicating required QoS parameters comprises the step of establishing an overlay routing protocol between the virtual network control function and the UNI control function.

Preferably, the overlay routing protocol is a multiprotocol Border Gateway Protocol extended by a UNI attribute.

Any of the above methods may further comprise:
- dynamically communicating required QoS parameters from a second UNI control function of a second data center site to the UNI control function, wherein the second data center site is linked to the first data center site by a virtual private network; and
- applying the required QoS parameters in the SLA negotiation for an ingress traffic flow from the second data center site to the first data center site.

Advantageously, the step of dynamically communicating required QoS parameters comprises the step of establishing an overlay routing protocol between the UNI control function and the second UNI control function.

In some embodiments, the method may further comprise the step of aggregating required QoS parameters for a plurality of ingress traffic flows at the gateway node,
wherein each ingress traffic flow is between one of a plurality of remote data center sites and the first data center site,
wherein each of the remote data center sites is linked to the first data center site by a virtual private network, and
wherein the required QoS parameters are applied in the SLA negotiation for the plurality of ingress traffic flows.

Advantageously, the method further comprises the step of:
- aggregating required QoS parameters for a plurality of ingress and egress traffic flows at the gateway node;
wherein the required QoS parameters are applied in the SLA negotiation for the plurality of ingress and egress traffic flows.

In some embodiments, the UNI control function is implemented in the gateway node.

In some embodiments, the underlay network elements include a software-defined controller, the UNI control function being implemented in the software-defined network controller.

In some embodiments, the overlay network elements include a network virtualization edge connected to the virtual machines, the virtual network control function being implemented in the network virtualization edge.

In some embodiments, the overlay network elements include a software-defined controller, the virtual network control function being implemented in the software-defined network controller.

Additional aspects and advantages of methods according to embodiments disclosed herein will be set forth, in part, in the detailed description, figures and any claims which follow, and, in part, will be derived from the detailed description. It is to be understood that both the foregoing general description and the following detailed description are only exemplary and do not limit the claimed inventions.

### BRIEF DESCRIPTION OF THE DRAWINGS

Exemplary embodiments of the method according to the present disclosure are described with reference to the accompanying drawings, in which:
Fig. 1, already described, schematically shows a typical VPN architecture;
Fig. 2, already described, schematically shows generic architecture for data centers;
Fig. 3 schematically shows a data center architecture with overlay and underlay network segments;
Fig. 4 illustrates a first embodiment of the implementation of the method according to the present disclosure;
Fig. 5 illustrates steps of an UPDATE message exchange conveying a UNI attribute according to the present disclosure;
Fig. 6 illustrates a second embodiment of the implementation of the method according to the present disclosure; and
Fig. 7 illustrates a third embodiment of the implementation of the method according to the present disclosure.

### DETAILED DESCRIPTION

The figures and the following description illustrate exemplary embodiments. In the figures, elements with similar structures and/or functions may be denoted by like reference numerals.

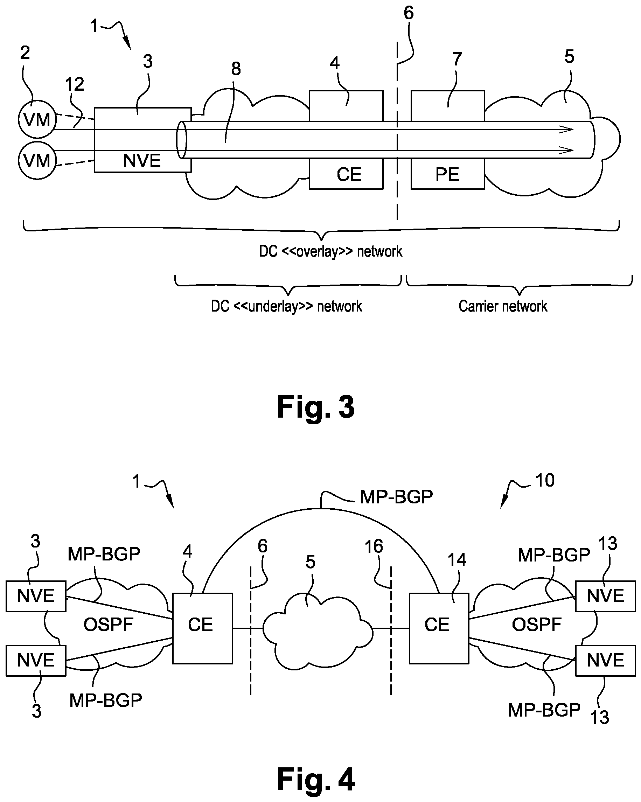

Reference is made to Fig. 3. Embodiments of the present disclosure provide a method for enabling a Service Level Agreement (SLA) negotiation in a data center 1. The data center 1, at a first data center site, comprises overlay network elements and underlay network elements. The overlay network elements include a plurality of virtual machines 2. The overlay network elements also include a network virtualization node 3 connected to the virtual machines 2. As shown in Fig. 3, the network virtualization node 3 may be a Network Virtualization Edge (NVE) 3. A data center site 1 may comprise several NVEs 3. The underlay network elements include, amongst others, a gateway node 4. As shown in Fig. 3, the gateway node may be a Customer Edge node (CE) 4.

The data center 1 is connected to a Provider Edge node (PE) 7 of a carrier network 5 via the gateway node 4. The interface between the carrier network 5, represented by the PE 7, and the data center site 1, represented by the gateway node, or CE, 4, is a User-Network Interface (UNI) 6. The negotiation of the SLA between the first data center site and the carrier network (5) is controlled by a UNI control function. The UNI control function may be implemented in the gateway node 4 so that the SLA is dynamically negotiated between the gateway node 4 and the provider edge node 7. As will be detailed further on, the UNI control function may also be implemented in a Software-Defined Network (SDN) controller (not shown). The SLA negotiation may implement ATM UNI signaling, GMPLS UNI signaling, or a proprietary signaling scheme deployed by the carrier.

Egress traffic is traffic exiting the data center site and flowing from the CE 4 towards the PE 7. Ingress traffic is traffic entering the data site and flowing from the PE 7 towards the CE 4. Egress traffic flows 12 in the overlay network from at least one of the plurality of virtual machines 2 are encapsulated into a Virtual Network (VN) tunnel 8 by a Virtual Network (VN) control function. The VN control function may be implemented in the network virtualization node 3, or NVE 3. As will be detailed further on, the VN function may also be implemented in an SDN controller (not shown). The VN tunnel 8 crosses the gateway node 4 and the UNI 6. In some cases, established VN tunnels may remain within the DC and not cross the gateway node 4.

An overlay routing protocol, such as MP-BGP, may be deployed within the overlay network. The NVE 3 of the data center site 1 may thus communicate with an NVE of another data center site (not shown) via this protocol, thereby exchanging network addresses managed by the tenant(s) of the data center. An underlay routing protocol is deployed within the underlay network, wherein the underlay network of a data center site 1 includes the CE 4 and other routers (not shown). The underlay routing protocol allows for exchanging network addresses managed by the carrier. This allows for isolating the addressing linked to the carrier from the addressing linked to a tenant/client.

The method according to embodiments disclosed herein comprises the following steps.

In a first step, required Quality of Service (QoS) parameters detained by the VN control function (e.g. QoS parameters required by the network virtualization node for a given egress traffic flow) are dynamically communicated to the UNI control function (e.g. to the gateway node 4) for an egress traffic flow within the VN tunnel 8.

In a second step, the required QoS parameters are applied (e.g. by the CE) in the SLA negotiation for the egress traffic flow 12.

Thus, for example, the required QoS parameters for a given egress traffic flow 12 are communicated from the NVE 3 to the CE 4. Accordingly, the CE, which is crossed by the VN tunnel 8, has the same detailed view on the network resource requirements of a traffic flow in the VN tunnel 8 as the NVE 3 which creates the VN tunnel 8.

As indicated above, the steps of the method according to the present disclosure may be carried out by the UNI control function and the VN control function. The UNI control function is a UNI signaling software process responsible for the negotiation of the SLAs at the UNI 6. The VN control function is responsible for the distribution and management of forwarding tables related to different VNs, and for the establishment and maintenance of VN tunnels 8. Information provided by the UNI control function may include an UNI control function identifier, information on egress traffic flows exiting the data center site via the related UNI interface, UNI QoS parameters presently in use for an egress traffic flow, and/or UNI proposed QoS parameters for this egress traffic flow. Information provided by the VN control function may include a VN control function identifier, egress traffic flow information (e.g. destination IP address/prefix), and/or required QoS parameters for a given egress traffic flow.

In some embodiments, the data center 1 is connected to the provider edge node 7 of the carrier network 5 via the gateway node 4 through a plurality of UNIs between the gateway node 4 and the provider edge node 7. For example, multiple Virtual Private Networks (VPNs, see Fig. 1) may serve a single CE, with each of the VPNs being responsible for the related VPN SLA at the related UNI. The method may then further comprise the step of identifying the UNI 6 of the plurality of UNIs which the VN network tunnel 8 is configured to cross. Thus, for each egress traffic flow 12, it is determined which UNI is crossed by that egress traffic flow.

In some embodiments, the method according to the present disclosure comprises the following further steps. First, required QoS parameters are dynamically communicated from a second UNI control function of a second data center site (e.g. from a second gateway node of the second data center site) to the UNI control function (e.g. to the gateway node 4). The second data center site is linked to the first data center site by a VPN (see, for example, Fig. 1 for the generic VPN architecture). Second, the required QoS parameters are applied in the SLA negotiation for an ingress traffic flow from the second data center site to the first data center site. Accordingly, for example, in a SLA negotiation between the traffic gateway node 4 and the provider edge node 7, required QoS parameters for ingress and egress traffic flows for that gateway node 4 are taken into account.

In some embodiments, the method according to the present disclosure further comprises the step of aggregating required QoS parameters for a plurality of ingress traffic flows at the traffic gateway node 4. Each ingress traffic flow is between one of a plurality of remote data center sites and the first data center site, and each of the remote data center sites is linked to the first data center site by a VPN. The required QoS parameters are then applied in the SLA negotiation for the plurality of ingress traffic flows.

Advantageously, the required QoS parameters for a plurality of ingress and egress traffic flows, communicated from the VN control function and a plurality of UNI control functions of remote data center sites, are aggregated at the gateway node 4 and then applied in the SLA negotiation for the plurality of ingress and egress traffic flows. Thus, for example, the gateway node 4 is aware of the entire traffic passing through it and of the associated required QoS parameters for each traffic flow.

According to some embodiments of the present disclosure, the step of dynamically communicating required QoS parameters from the VN control function to the UNI control function comprises the step of establishing an overlay routing protocol between the VN control function and the UNI control function (e.g. between the network virtualization node 3 and the traffic gateway node 4). Similarly, the step of dynamically communicating required QoS parameters from the second UNI control function to the UNI control function (e.g. from the second gateway node to the gateway node 4) may comprise the step of establishing an overlay routing protocol between the respective embedded UNI control functions. For example, the overlay routing protocol may be a multiprotocol Border Gateway Protocol (MP-BGP) (Internet Engineering Task Force (IETF) Request for Comments (RFC) 4760) extended by a UNI attribute. An example of such a UNI attribute will be described further below.

The implementation of the methods according to embodiments disclosed herein will be described in the following.

A first embodiment is shown in Fig. 4. In this implementation example, both the overlay network and the intra-DC underlay network are controlled in a distributed manner. Fig. 4 illustrates a first data center site 1 and a second data center site 10, which are connected to each other, over a carrier network 5 (i.e. using a VPN), through their respective CEs 4, 14 via respective UNIs 6, 16. The underlay routing protocol may be, for example, the Open Shortest Path First (OSPF) protocol (IETF RFC 2328). In the embodiment of Fig. 4, the CE 4 is included into the overlay network forwarding plane by involving the CE 4 into the MP-BGP session mesh. A hierarchical architecture of the MP-BGP mesh includes a full MP-BGP session mesh established between all the CEs 4, 14 and, for each data center site 1, 10, each NVE 3, 13 establishes a single MP-BGP session to a CE 4, 14. In this embodiment, the UNI control function is implemented in the gateway node 4 (CE), and the VN control function is implemented in the NVE 3.

Advantageously, the aforementioned extension of the MP-BGP allows each of the NVE 3, 13 (e.g. the VN control function) and the CE 4, 14 (e.g. the UNI control function) to exchange information. In particular, required QoS parameters are dynamically communicated from the NVE 3, 13 to the CE 4, 14. Other traffic information may be exchanged (e.g. proposed QoS parameters and presently applied QoS parameters from the UNI 6, 16). The CE 4, 14 (and eventually the NVE 3, 13) are thereby enabled to perform an alignment of their respective information.

An example of a non-transitive UNI attribute may be the following. The UNI attribute may be conveyed within an MP-BGP UPDATE message. The attribute type code should be attributed by the Internet Assigned Numbers Authority (IANA). The attribute may be encoded as shown below:

| |
|---|
| Control Function Type (1 octet) |
| Control Function ID (8 octets) |
| Flag (4 bits) - Request ID (60 bits) |
| Length of Parameters in octets (1octet) |
| Parameters (variable) |

Control Function Type: indicates the type of control function:
   - 1: UNI control function
   - 2: VN control function
Control Function ID: allows for uniquely identifying the control function amongst a given control function type.
Flag: contains 4 flags encoded as followings:
   - Bit 1: set to indicate that the sender requests QoS information from the receiver, i.e. required QoS parameters if the sender is a UNI control function, and presently applied QoS parameters for a given Network Layer Reachability Information (NLRI) if the sender is a VN control function. The NLRI allows the MP-BGP protocol to carry information on subnet addressing (e.g. IP prefix). For instance, the NLRI carrying information on IP address ranges of reachable VMs in the overlay network.
   - Bit 2: set to indicate that the QoS parameters contained in the message are required QoS parameters (from the NVE)
   - Bit 3: set to indicate that the QoS parameters contained in the message are proposed QoS parameters (from the UNI)
   - Bit 4: set to indicate that the QoS parameters contained in the message are presently applied QoS parameters (by the UNI for a given NLRI)
Request ID: allows both the VN control function and the UNI control function to track the request and the associated reply. The field value should be unique for a given MP-BGP session.
Length of Parameters: indicates the length in octets of the Parameters field. Parameters: this field is organized in a Type Length Value (TLV) structures with the following TLVs defined:
   - Tenant Identifier (Type = 0x1)
   - VN Identifier (Type = 0x2)
   - NLRI Identifier (Type = 0x3)
   - Recorded NLRI Identifier (Type = 0x4)
   - Peak Bandwidth (Type = 0x5)
   - Average Bandwidth (Type = 0x6)
   - Guaranteed Bandwidth (Type = 0x7)
   - Delay (Type = 0x8)
   - Packet Loss Ratio (Type = 0x9)

Within some SLA negotiation frameworks, the carrier has the possibility to provide feedback to the customer (e.g. a cloud service provider at a data center site) such as proposed QoS parameters to be implemented. This proposition aims at optimizing the resource usage within the carrier's infrastructure. The presently applied QoS parameters are useful for the customer's information.

The Tenant Identifier TLV is optional. It allows however for the CE 4 to aggregate VNs pertaining to the same tenant for billing purpose.

The MP-BGP UPDATE message may also include the proposed QoS parameters for the NLRI (i.e. if the bit 3 of the Flag field is set), or the presently applied QoS parameters for the NLRI (i.e. if the bit 4 of the Flag field is set). The NLRI Identifier TLV may be included into the UPDATE message so that subsequent message exchanges (e.g. reply from the NVE) relating to required QoS parameters can uniquely be associated to the aforementioned NLRI.

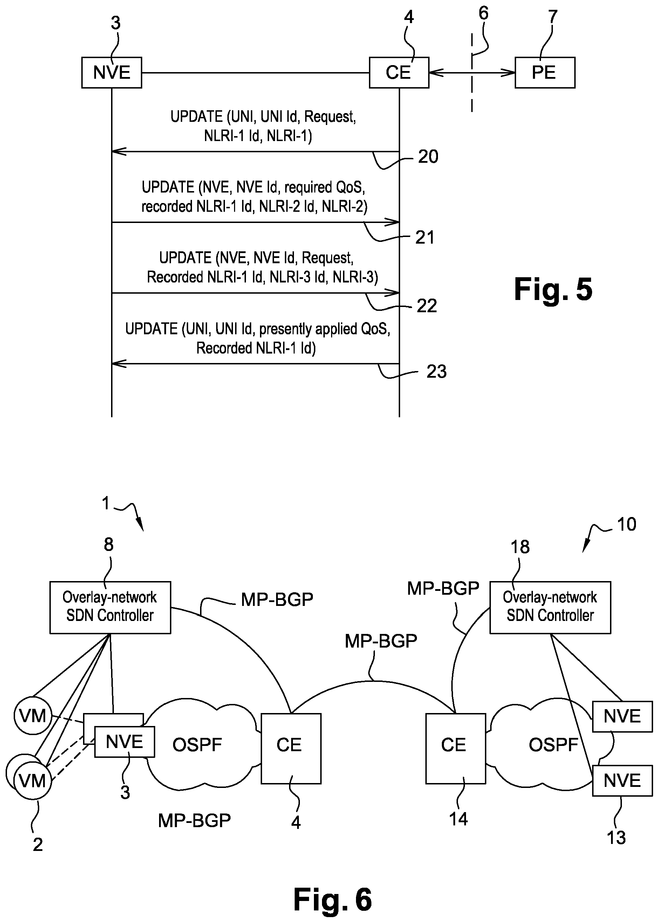

An example of UPDATE message exchanges between an NVE 3 and a CE 4 is illustrated in Fig. 5.

In a first step 20, the UNI control function, implemented on the CE 4, sends to the VN control function, implemented on the NVE 3, an UPDATE message asking for the required QoS parameters (Bit 1 of the Flag field set to 1) associated to NLRI-1, advertising the latter in the same UPDATE message to the NVE 3. The IP address range NLRI-1 is implemented elsewhere (e.g. in a remote DC site) and unknown to the NVE 3. An NLRI Identifier TLV, NLRI-1 Id, is included in order to associate to the advertised NLRI-1 a unique ID. The UNI Id allows for uniquely identifying the UNI interface.

In a second step 21, the VN control function replies to the previous request with an UPDATE message containing the recorded NLRI-1 Id TLV and the required QoS parameters (Bit 2 of the Flag field set to 1). The NVE Id allows for uniquely identifying the NVE 3.

In a third step 22, the VN control function sends to the UNI control function an UPDATE message asking for the presently applied QoS parameters (Bit 1 of the Flag field set to 1) associated to the NLRI-1. For this purpose, it includes into the same message the recorded NLRI-1 Id TLV.

In order to optimize the message exchanges, the NVE 3 can communicate the IDs associated with NLRI-2 and NLRI-3, respectively, in the same exchanged messages concerning the NLRI-1. These address ranges may be those used by the VMs connected to the considered NVE 3.

In a fourth step 23, the UNI control function replies to the VN control function with the presently applied QoS parameters (Bit 4 of the Flag field set to 1). The UNI control function includes the recorded NLRI-1 Id TLV into the message to show that the presently applied QoS parameters are associated with the NLRI-1.

After this UPDATE message exchange, the CE 4 is configured to aggregate VN egress traffic requirements (i.e. aggregated QoS parameters for traffic flows from the CE 4 to the PE 7) and to apply them in the SLA negotiation to adjust the SLA using the UNI signalization.

In order to allow a given CE, for example CE-A, to aggregate its ingress traffic QoS parameters, e.g. per tenant or per VN, other remote CEs (i.e. of remote data center sites) need to inform CE-A of their respective required QoS parameters for their egress traffic flows towards CE-A. For this purpose, the UNI attribute can be used between CEs with the following information:
- Control function type = 1 to indicate the sender of the message is a UNI control function
- Control function ID: indicates the ID of the sender of the message
- Tenant ID: indicates the tenant who is the owner of the ingress data plane defined by the QoS parameters
- VN ID: indicates that the QoS parameters are aggregated QoS parameters bound to the VN identified by this VN ID. The VN ID could be, for instance, a Route Distinguisher in the context of Virtual Private Routed Network (VPRN) (IETF RFC 2547).
- Peak Bandwidth: indicates the ingress aggregated peak bandwidth required by the VN/Tenant traffics coming from the sender (e.g. a remote CE).
- Average Bandwidth: indicates the ingress traffics aggregated average bandwidth required by the VN/Tenant traffics coming from the sender (e.g. a remote CE).
- Guaranteed Bandwidth: indicates the ingress traffic aggregated guaranteed bandwidth required by the VN/Tenant traffics coming from the sender (e.g. a remote CE).

If there exist multiple VPNs with each of them providing a different level of service quality, then the CE may implement different UNIs, each UNI being related to a particular VPN and related SLA. Each UNI may, for example, be supported by an Attachment Circuit. Within this multiple-VPN context, the CE may aggregate VNs carrying traffic flows having the same required QoS parameters and forward them onto a selected VPN. The related UNI control function may then modulate the selected VPN's QoS characteristics, eventually within predefined ranges.

A second embodiment of the method according to the present disclosure is illustrated in Fig. 6. In this implementation example, the overlay network is controlled by a centralized SDN controller 8, 18, and the underlay network is implementing a distributed control mechanism, such as the aforementioned OSPF. One centralized SDN controller 8, 18 is deployed on each data center site 1, 10 in order to control the overlay network elements of this site (i.e. the VMs 2 and the NVEs 3). In this second embodiment, the UNI control function is implemented in the CE 4, and the network virtualization node is controlled by the SDN controller 8, i.e. the VN control function is implemented on the SDN controller 8.

The interaction between the VN control function, implemented on the SDN controllers 8, 18, and the UNI control function, implemented on the CEs 4, 14 (on each data center site 1, 10, respectively), is ensured in a similar way as in the first embodiment. The CEs 4, 14 are integrated into the MP-BGP session mesh, i.e., a MP-BGP session is setup between each SDN controller 8, 18 and the respective CEs 4, 14. A MP-BGP session is also setup between each pair of CEs 4, 14. Thus, the MP-BGP session topology in this embodiment is similar to the one of the first embodiment, while replacing the NVEs by their SDN controllers 8, 18.

The MP-BGP extension (e.g. UNI attribute) as described within the first embodiment may then be reused in this second embodiment in a similar way in order to exchange traffic information and to perform the QoS parameters alignment as described hereinabove.

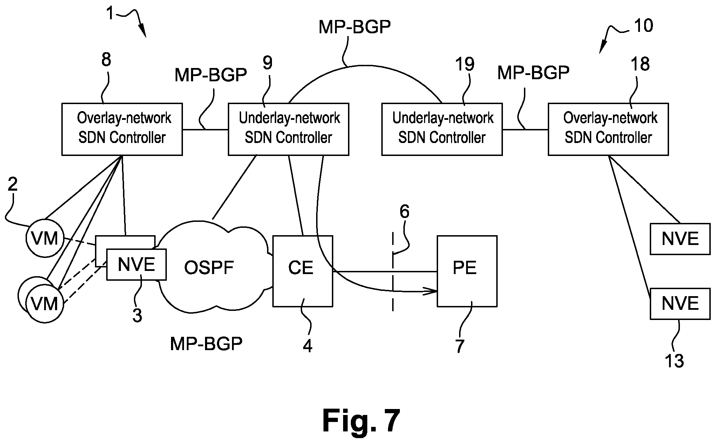

A third embodiment of the method according to the present disclosure is illustrated in Fig. 7. In this implementation example, both the overlay network and the underlay network are controlled by separate SDN controllers 8, 18, 9, 19. In this embodiment, both the gateway node and the network virtualization node are controlled by their respective SDN controllers, i.e. the VN control function is implemented in first (overlay) SDN controllers 8, 18, and the UNI control function is implemented in second (underlay) SDN controllers 9, 19, as shown in Fig. 7. Indeed, on a data center site 1, the second SDN controller 9 implements a virtualized UNI functionality (vUNI) which allows it to directly negotiate SLA parameters with a peer PE 7 via the CE 4 and a control channel linking the second SDN controller 9 to the CE 4.

Again, the interaction between the VN control function, implemented in the first SDN controllers 8, 18, and the UNI control function, implemented in the second SDN controllers 9, 19, is provided in a similar way as in the first embodiment. The second SDN controllers 9, 19 are integrated into the MP-BGP session mesh, i.e., a MP-BGP session is setup between the first SDN controllers 8, 18 and the respective second SDN controllers 9, 19. A MP-BGP session is also setup between each pair of second controllers 9, 19. Thus, the MP-BGP session topology in this embodiment is similar to the one of the first embodiment, while replacing the NVEs by their SDN controllers and the CEs by their SDN controllers.

The MP-BGP extension (e.g. UNI attribute) as described within the first embodiment may then be reused in this third implementation example in a similar way in order to exchange traffic information and to perform the QoS parameters alignment as described hereinabove.

The method according to embodiments disclosed herein provides a number of advantages, some of which are noted in the following.

The method according to the present disclosure allows for an efficient interaction between the VN control function (pertaining to overlay networking) and the UNI control function (pertaining to underlay networking). Therefore, QoS information can be exchanged between these entities. This allows the different entities (i.e. NVE, CE, PE) to optimize network resource usage aiming at both meeting the application requirements and OPEX reduction. In particular, the CE has fine grain access to QoS requirements, and not only to the observed average bandwidth, in order to efficiently negotiate the appropriate SLA with the carrier.

A person skilled in the art would readily recognize that steps of embodiments of the above-described method can be performed by programmed computers. Herein, some embodiments are intended to cover program storage devices, e.g. digital data storage media, which are machine-executable and encode machine-executable or computer-executable programs of instructions where said instructions perform some or all of the steps of methods described herein. The program storage devices may be, for example, digital memories, magnetic storage media such as magnetic discs or tapes, hard drives, or optically readable digital storage media. The embodiments are also intended to cover computers programmed to perform said steps of methods described herein.

Although some embodiments of the present invention have been illustrated in the accompanying drawings and described in the foregoing detailed description, it should be understood that the present invention is not limited to the disclosed embodiments, but is capable of numerous rearrangements, modifications, and substitutions without departing from the invention as set forth and defined by the following claims.

## Claims

1. A method for enabling Service Level Agreement, SLA, negotiation, in a data center (1) comprising, at a first data center site, overlay network elements and underlay network elements, the overlay network elements including a plurality of virtual machines (2), the underlay network elements including a gateway node (4),
wherein the data center (1) is configured to be connected to a provider edge node (7) of a carrier network (5) via the gateway node (4) through a User-Network Interface, UNI, (6) between the gateway node (4) and the provider edge node (7),
wherein the negotiation of the SLA between the first data center site and the carrier network (5) is controlled by a UNI control function, and
wherein egress traffic flows (12) in the overlay network from at least one of the plurality of virtual machines (2) are encapsulated into a virtual network tunnel (8) by a virtual network control function, the virtual network tunnel (8) being configured to cross the gateway node (4) and the UNI (6);
the method comprising:
- dynamically communicating required Quality of Service, QoS, parameters detained by the virtual network control function to the UNI control function for an egress traffic flow (12) within the virtual network tunnel (8); and
- applying the required QoS parameters in the SLA negotiation for the egress traffic flow (12).

2. The method according to claim 1, wherein the data center (1) is configured to be connected to the provider edge node (7) of the carrier network (5) via the gateway node (4) through a plurality of UNIs between the gateway node (4) and the provider edge node (7), the method further comprising:
- identifying the UNI (6) of the plurality of UNIs which the virtual network tunnel (8) is configured to cross.

3. The method according to claim 1 or 2, wherein the step of dynamically communicating required QoS parameters comprises the step of establishing an overlay routing protocol between the virtual network control function and the UNI control function.

4. The method according to claim 1 or 2, further comprising:
- dynamically communicating required QoS parameters from a second UNI control function of a second data center site to the UNI control function, wherein the second data center site is linked to the first data center site by a virtual private network; and
- applying the required QoS parameters in the SLA negotiation for an ingress traffic flow from the second data center site to the first data center site.

5. The method according to claim 4, wherein the step of dynamically communicating required QoS parameters comprises the step of establishing an overlay routing protocol between the UNI control function and the second UNI control function.

6. The method according to claim 4 or 5, further comprising the step of aggregating required QoS parameters for a plurality of ingress traffic flows at the traffic gateway node (4),
wherein each ingress traffic flow is between one of a plurality of remote data center sites and the first data center site,
wherein each of the remote data center sites is linked to the first data center site by a virtual private network, and
wherein the required QoS parameters are applied in the SLA negotiation for the plurality of ingress traffic flows.

7. The method according to any of claims 4 to 6, further comprising the step of:
- aggregating required QoS parameters for a plurality of ingress and egress traffic flows at the gateway node (4);
wherein the required QoS parameters are applied in the SLA negotiation for the plurality of ingress and egress traffic flows.

8. The method according to any of the preceding claims, wherein the overlay routing protocol is a multiprotocol Border Gateway Protocol extended by a UNI attribute.

9. The method according to any of the preceding claims, wherein the UNI control function is implemented in the gateway node (4).

10. The method according to any of claims 1 to 8, wherein the underlay network elements include a software-defined controller (9), the UNI control function being implemented in the software-defined network controller (9).

11. The method according to any of the preceding claims, wherein the overlay network elements include a network virtualization edge (3) connected to the virtual machines (2), the virtual network control function being implemented in the network virtualization edge (3).

12. The method according to any one of claims 1 to 10, wherein the overlay network elements include a software-defined controller (8), the virtual network control function being implemented in the software-defined network controller (8).

## Patentansprüche

1. Verfahren zum Ermöglichen einer Verhandlung der Dienstgütevereinbarung, SLA, in einer Datenzentrale (1), umfassend, an einem ersten Datenzentralestandort, Overlay-Netzwerkelemente und Underlay-Netzwerkelemente, wobei die Overlay-Netzwerkelemente eine Vielzahl von virtuellen Maschinen (2) einschließen und die Underlay-Netzwerkelemente einen Gateway-Knoten (4) einschließen,
wobei die Datenzentrale (1) konfiguriert ist, mit einem Provide-Randknoten (7) eines Trägernetzwerks (5) mittels des Gateway-Knotens (4) durch eine Benutzer-Netzwerk-Schnittstelle, UNI, (6) zwischen dem Gateway-Knoten (4) und dem Provider-Randknoten (7) verbunden zu werden,
wobei die Verhandlung der SLA zwischen dem ersten Datenzentralestandort und dem Trägernetzwerk (5) gesteuert wird durch eine UNI-Steuerfunktion, und
wobei Ausgangsverkehrsflüsse (12) im Overlay-Netzwerk von mindestens einer der Vielzahl von virtuellen Maschinen (2) verkapselt sind in einem virtuellen Netzwerktunnel (8) mittels einer virtuellen Netzwerksteuerfunktion, wobei der virtuelle Netzwerktunnel (8) konfiguriert ist zum Kreuzen des Gateway-Knotens (4) und der UNI (6);
wobei das Verfahren umfasst:
- dynamische Kommunikation der benötigten Dienstgüte-, QoS, Parameter, die von der virtuellen Netzwerksteuerfunktion aufgehalten werden durch die virtuelle Netzwerksteuerfunktion, zur UNI-Steuerfunktion für einen Ausgangsverkehrsfluss (12) innerhalb des virtuellen Netzwerktunnels (8); und
- Anwenden der benötigten QoS-Parameter in der SLA-Verhandlung für den Ausgangsverkehrsfluss (12).

2. Verfahren nach Anspruch 1, wobei die Datenzentrale (1) konfiguriert ist, um mit dem Provider-Randknoten (7) des Trägernetzwerks (5) über den Gateway-Knoten (4) mittels einer Vielzahl von UNIs zwischen dem Gateway-Knoten (4) und dem Provider-Randknoten (7) verbunden zu werden, wobei das Verfahren weiterhin umfasst:
- Identifizieren der UNI (6) der Vielzahl von UNIs, die zum Kreuzen der virtuelle Netzwerktunnel (8) konfiguriert ist.

3. Verfahren nach Anspruch 1 oder 2, wobei der Schritt der dynamischen Kommunikation der benötigten QoS-Parameter den Schritt des Aufbaus eines Overlay-Routing-Protokolls zwischen der virtuellen Netzwerksteuerfunktion und der UNI-Steuerfunktion umfasst.

4. Verfahren nach Anspruch 1 oder 2, weiterhin umfassend:
- dynamische Kommunikation der benötigten QoS-Parameter von einer zweiten UNI-Steuerfunktion eines zweiten Datenzentralestandorts zur UNI-Steuerfunktion, wobei der zweite Datenzentralestandort mit dem ersten Datenzentralestandort mittels eines virtuellen privaten Netzwerks verbunden ist; und
- Anwenden der benötigten QoS-Parameter in der SLA-Verhandlung für einen Eingangsverkehrsfluss von dem zweiten Datenzentralestandort zum ersten Datenzentralestandort.

5. Verfahren nach Anspruch 4, wobei der Schritt der dynamischen Kommunikation der benötigten QoS-Parameter den Schritt des Aufbaus eines Overlay-Routing-Protokolls zwischen der UNI-Steuerfunktion und der zweiten UNI-Steuerfunktion umfasst.

6. Verfahren nach Anspruch 4 oder 5, weiterhin umfassend die Schritte von Zusammenfassen der benötigten QoS-Parameter für eine Vielzahl von Eingangsverkehrsflüssen am Verkehrs-Gateway-Knoten (4),
wobei jeder Eingangsverkehrsfluss zwischen einem einer Vielzahl von Ferndatenzentralestandorten und dem ersten Datenzentralestandort erfolgt,
wobei jeder der Ferndatenzentralestandorte mit dem ersten Datenzentralestandort mittels eines virtuellen privaten Netzwerks verbunden ist, und
wobei die benötigten QoS-Parameter in der SLA-Verhandlung für die Vielzahl von Eingangsverkehrsflüssen angewendet werden.

7. Verfahren nach einem beliebigen der Ansprüche 4 bis 6, weiterhin umfassend die folgenden Schritte:
- Zusammenfassen der benötigten QoS-Parameter für eine Vielzahl von Eingangs- und Ausgangsverkehrsflüssen am Gateway-Knoten (4);
wobei die benötigten QoS-Parameter in der SLA-Verhandlung für die Vielzahl von Eingangs- und Ausgangsverkehrsflüssen angewendet werden.

8. Verfahren nach einem beliebigen der vorhergehenden Ansprüche, wobei das Overlay-Routing-Protokoll ein mit einem UNI-Attribut erweitertes Multiprotokoll-Border-Gateway-Protokoll ist.

9. Verfahren nach einem beliebigen der vorhergehenden Ansprüche, wobei die UNI-Steuerfunktion im Gateway-Knoten (4) implementiert ist.

10. Verfahren nach einem beliebigen der Ansprüche 1 bis 8, wobei die Underlay-Netzwerkelemente einen software-definierten Controller (9) umfassen und wobei die UNI-Steuerfunktion im software-definierten Netzwerkcontroller (9) implementiert ist.

11. Verfahren nach einem beliebigen der vorhergehenden Ansprüche, wobei die Overlay-Netzwerkelemente einen Netzwerkvirtualisierungsrand (3) einschließen, der mit den virtuellen Maschinen (2) verbunden ist, wobei die virtuelle Netzwerksteuerfunktion im Netzwerkvirtualisierungsrand (3) implementiert ist.

12. Verfahren nach einem beliebigen der Ansprüche 1 bis 10, wobei die Overlay-Netzwerkelemente einen software-definierten Controller (8) einschließen, wobei die virtuelle Netzwerksteuerfunktion im software-definierten Netzwerkcontroller (8) implementiert ist.

## Revendications

1. Procédé pour permettre une négociation d'accord sur les niveaux de service (ANS), dans un centre de données (1) comprenant, au niveau d'un premier site de centre de données, des éléments de réseau superposé et des éléments de réseau sous-jacent, les éléments de réseau superposé comprenant une pluralité de machines virtuelles (2), les éléments de réseau sous-jacent comprenant un noeud de passerelle (4),
dans lequel le centre de données (1) est configuré pour être connecté à un noeud de bordure de fournisseur (7) d'un réseau porteur (5) par l'intermédiaire du noeud de passerelle (4) à travers une interface utilisateur-réseau, UNI, (6) entre le noeud de passerelle (4) et le noeud de bordure de fournisseur (7),
dans lequel la négociation de l'ANS entre le premier site de centre de données et le réseau porteur (5) est commandée par une fonction de commande UNI, et
dans lequel les flux de trafic de sortie (12) dans le réseau superposé provenant d'au moins une machine virtuelle parmi la pluralité de machines virtuelles (2) sont encapsulés dans un tunnel de réseau virtuel (8) par une fonction de commande de réseau virtuel, le tunnel de réseau virtuel (8) étant configuré pour traverser le noeud de passerelle (4) et l'UNI (6) ;
le procédé comprenant les étapes suivantes :
- communiquer de manière dynamique des paramètres de qualité de service, QoS, requis détenus par la fonction de commande de réseau virtuel à la fonction de commande UNI pour un flux de trafic de sortie (12) dans le tunnel de réseau virtuel (8) ; et
- appliquer les paramètres QoS requis dans la négociation de l'ANS pour le flux de trafic de sortie (12).

2. Procédé selon la revendication 1, dans lequel le centre de données (1) est configuré pour être connecté au noeud de bordure de fournisseur (7) du réseau porteur (5) par l'intermédiaire du noeud de passerelle (4) à travers une pluralité d'UNI entre le noeud de passerelle (4) et le noeud de bordure de fournisseur (7), le procédé comprenant en outre l'étape suivante :
- identifier l'UNI (6) parmi la pluralité d'UNI que le tunnel de réseau virtuel (8) est configuré pour traverser.

3. Procédé selon la revendication 1 ou 2, dans lequel l'étape de communication dynamique de paramètres QoS requis comprend l'étape d'établissement d'un protocole de routage superposé entre la fonction de commande de réseau virtuel et la fonction de commande UNI.

4. Procédé selon la revendication 1 ou 2, comprenant en outre les étapes suivantes :
- communiquer de manière dynamique des paramètres QoS requis provenant d'une deuxième fonction de commande UNI d'un deuxième site de centre de données à la fonction de commande UNI, dans lequel le deuxième site de centre de données est relié au premier site de centre de données par un réseau privé virtuel ; et
- appliquer les paramètres QoS requis dans la négociation de l'ANS pour un flux de trafic d'entrée provenant du deuxième site de centre de données au premier site de centre de données.

5. Procédé selon la revendication 4, dans lequel l'étape de communication dynamique de paramètres QoS requis comprend l'étape d'établissement d'un protocole de routage superposé entre la fonction de commande UNI et la deuxième fonction de commande UNI.

6. Procédé selon la revendication 4 ou 5, comprenant en outre l'étape d'agrégation de paramètres QoS requis pour une pluralité de flux de trafic d'entrée au niveau du noeud de passerelle de trafic (4),
dans lequel chaque flux de trafic d'entrée est entre un site de centre de données distant parmi une pluralité de sites de centre de données distants et le premier site de centre de données,
dans lequel chacun des sites de centre de données distants est relié au premier site de centre de données par un réseau privé virtuel, et
dans lequel les paramètres QoS requis sont appliqués dans la négociation de l'ANS pour la pluralité de flux de trafic d'entrée.

7. Procédé selon l'une quelconque des revendications 4 à 6, comprenant en outre l'étape suivante :
- agréger des paramètres QoS requis pour une pluralité de flux de trafic d'entrée et de sortie au niveau du noeud de passerelle (4) ;
dans lequel les paramètres QoS requis sont appliqués dans la négociation de l'ANS pour la pluralité de flux de trafic d'entrée et de sortie.

8. Procédé selon l'une quelconque des revendications précédentes, dans lequel le protocole de routage superposé est un protocole de passerelle de bordure multiprotocole étendu par un attribut UNI.

9. Procédé selon l'une quelconque des revendications précédentes, dans lequel la fonction de commande UNI est mise en oeuvre dans le noeud de passerelle (4).

10. Procédé selon l'une quelconque des revendications 1 à 8, dans lequel les éléments de réseau sous-jacent comprennent un contrôleur défini par logiciel (9), la fonction de commande UNI étant mise en oeuvre dans le contrôleur de réseau défini par logiciel (9).

11. Procédé selon l'une quelconque des revendications précédentes, dans lequel les éléments de réseau superposé comprennent une bordure de virtualisation de réseau (3) connectée aux machines virtuelles (2), la fonction de commande de réseau virtuel étant mise en oeuvre dans la bordure de virtualisation de réseau (3).

12. Procédé selon l'une quelconque des revendications 1 à 10, dans lequel les éléments de réseau superposé comprennent un contrôleur défini par logiciel (8), la fonction de commande de réseau virtuel étant mise en oeuvre dans le contrôleur de réseau défini par logiciel (8).
